Europäisches Patentamt

European Patent Office

Office européen des brevets

(11) Publication number: **0 083 810**
**A2**

(12) **EUROPEAN PATENT APPLICATION**

(21) Application number: **82201306.6**

(22) Date of filing: **26.10.82**

(51) Int. Cl.³: **B 60 S 3/04**

(30) Priority: **31.12.81 IT 2394681 U**

(43) Date of publication of application:
**20.07.83 Bulletin 83/29**

(84) Designated Contracting States:
**AT BE CH DE FR GB LI LU NL SE**

(71) Applicant: **Phillips, Donald W.**
**Chateau Perigord (45D) 6, Lacets Saint Leon**
**Monte Carlo(MC)**

(72) Inventor: **Phillips, Donald W.**
**Chateau Perigord (45D) 6, Lacets Saint Leon**
**Monte Carlo(MC)**

(74) Representative: **Giambrocono, Alfonso, Dott.**
**Ing. et al,**
**Via Rosolino Pilo 19/B**
**I-20129 Milano(IT)**

(54) **Plant for manually washing motor vehicles with minimum water consumption.**

(57) The plant comprises, in combination, an aerator device (14) arranged to feed to a manually operated brush (20) a foam prepared by intimately mixing compressed air (7) with a soap solution (1); a pistol (26) for releasing a jet of air mixed with water for rinsing the entire vehicle body, with the possible addition of wax polish (2); a vacuum cleaner (39) operating on the Venturi principle using air as the drive fluid; and a device (40- 43) for controlling the various components, either on a time basis or otherwise.

Fig. 1

0083810

terminating in a grip 25 of a pistol indicated overall by 26. To said grip 25 there are also connected a flexible hose 27, connected by a connector 28 to a conduit 29 fitted with a normally closed solenoid valve 30 and branching from the main air conduit 7, and a flexible hose 31 connected by a connector 32 to a conduit 33 which is fitted with a normally closed solenoid valve 34 and feeds water originating from a suitable source.

The main air conduit 7 also comprises a further branch 35 fitted with a normally closed solenoid valve 36 and connected by a connector 37 to a flexible hose 38 carrying a vacuum cleaner 39 operating on the Venturi principle.

The timed opening of the various solenoid valves is determined by operating pushbuttons provided on a control panel 40.

Operation of the pushbutton 41 energised and opens the solenoid valves 11 and 16, with consequent feed of compressed air and soap solution into the aerator device 14, to form foam which travels through the conduit 17 and hose 19 to the brush 20 for applying soap to the vehicle body, with resultant removal of most of the dirt therefrom. On termination of this first operation (the solenoid valves 11 and 16 can be de-energised by the action of a suitable timer, not shown), the pushbutton 42 is operated to energise and open the solenoid valves 34 and 30, with consequent feed of water and wax solution to the pistol 26 through the hoses 31 and 27, for rinsing and waxing the vehicle body.

Operation of the pushbutton 43 energises and opens the solenoid valves 30 and 13 for washing the engine without using water (the detergent solution used for the engine contains no water in order to prevent any possible short-circuiting).

Finally, operation of the pushbutton 44 energises and opens the solenoid valve 36 for operating the vacuum cleaner 39 by way of hoses 38, in order to allow internal cleaning of the vehicle.

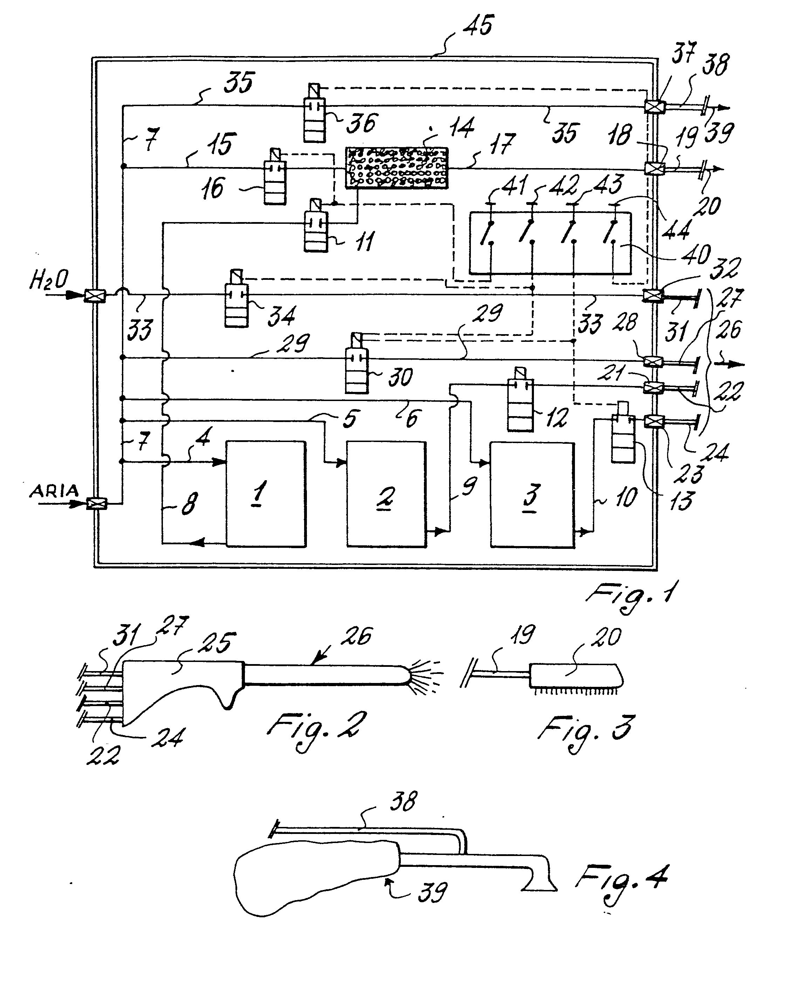

As can be seen from Figure 1, the various plant components, with the obvious exception of the hoses, can be contained in a case 45 of small overall size, while the hoses and the parts connected thereto (20, 26, 39) can be brought to the washing zone possibly by means of a swivelling arm.

If required, the control panel 40 can be fitted with a suita-Plant for manually washing motor vehicles with minimum water

consumption

The present invention relates to a plant for manually washing motor vehicles, the combination and configuration of its component parts being such as to enable through cleaning to be attained with minimum water consumption.

According to the invention, the plant comprises, in combination, an aerator device arranged to feed to a manually operated brush a foam prepared by intimately mixing compressed air with a soap solution; a pistol for releasing a jet of air mixed with water for rinsing the entire vehicle body, with the possible addition of wax polish; a vacuum cleaner operating on the Venturi principle using air as the drive fluid; and a device for controlling the various components, either on a time basis or otherwise.

The invention is illustrated by way of example in the figures of the single accompanying drawing, in which:

Figure 1 is a diagram showing the plant in terms of its components; and

Figures 2, 3 and 4 are diagrammatic views of the pistol, brush and vacuum cleaner.

With reference to the said figures, the plant comprises three vessels 1, 2 and 3 for containing a soap solution, a wax solution and an engine wash detergent solution respectively.

The three vessels are kept under pressure by conduits 4, 5 and 6 deriving from a main compressed air conduit 7, each vessel being provided with delivery conduits 8, 9 and 10, each fitted with a normally closed solenoid valve 11, 12 and 13.

The delivery conduit 8 opens into an aerator device 14 consisting of a hollow casing containing a plurality of glass balls, into which there also opens a conduit 15 branching from the air conduit 7 and fitted with a normally closed solenoid valve 16. An outlet conduit 17 from the aerator device 14 is connected by way of a connector 18 to a flexible hose 19 carrying a manually operated brush 20.

The delivery conduit 9 is connected by a connector 21 to a flexible hose 22, and the delivery conduit 10 is connected by a connector 23 to a flexible hose 24, said hoses 22 and 24

0083810

ble coin bow for operating the various pushbuttons for controlling the various wash stages.

From the aforegoing it is apparent that the plant is compact
and water consumption is very low, being limited only to the
rinsing stage, the actual cleaning stage being carried out
using foam formed by means of the aerator device.

In a modification which is not illustrated but which falls
within the scope of the present invention, the solutions
contained in the vessels 1, 2 and 3 can be delivered by suction, using Venturi valves which utilise compressed air as
the drive fluid.

What we claim is:

1. A plant for manually washing motor vehicles with minimum water consumption, characterised by comprising an aerator device (14) arranged to feed a manually operated brush (20) with a foam prepared by intimately mixing a soap solution (1) with compressed air (7).

2. A plant as claimed in claim 1, characterised in that said aerator device (14) comprises a hollow casing for containing a plurality of balls, said device being provided with a first inlet for the compressed air (15), a second inlet for the soap (8) solution, and a single outlet (17) for delivering the foam to said manually operated brush (20).

3. A plant as claimed in claim 1, characterised by further comprising a pistol (26) fed with compressed air and water for generally rinsing the vehicle body.

4. A plant as claimed in claim 3, characterised by comprising a wax solution source (2) and means (9, 12, 21, 22) for feeding said wax solution to said pistol (26) together with said water and said compressed air.

5. A plant as claimed in claim 3, characterised by comprising an engine detergent solution source (3) and means (10, 13, 24) for feeding said detergent solution to said pistol (26) together with said compressed air.

6. A plant as claimed in the preceding claims, characterised by comprising a branch (35) from the main compressed air conduit (7) for operating a vacuum cleaner (39) by the Venturi principle.

7. A plant as claimed in the preceding claims, characterised by comprising normally closed solenoid valves (11-13, 16, 30, 34, 36) disposed in the various conduits (8-10, 15, 29, 33, 35), and pushbutton means (41-44) for the controlled opening of said valves in accordance with a predetermined programme.

Fig. 1

Fig. 2

Fig. 3

Fig. 4